(19) Europäisches Patentamt
European Patent Office
Office européen des brevets

(11) **EP 2 250 041 B1**

(12) **EUROPEAN PATENT SPECIFICATION**

(45) Date of publication and mention
of the grant of the patent:
**16.01.2013 Bulletin 2013/03**

(51) Int Cl.:
*B60K 31/00* (2006.01)   *B60W 30/16* (2012.01)
*G01S 13/93* (2006.01)   *B60W 30/14* (2006.01)
*B60W 30/17* (2012.01)

(21) Application number: **09707287.0**

(22) Date of filing: **16.01.2009**

(86) International application number:
**PCT/SE2009/050037**

(87) International publication number:
**WO 2009/099382 (13.08.2009 Gazette 2009/33)**

(54) **METHOD AND DEVICE FOR ADAPTIVE CRUISE CONTROL, COMPUTER PROGRAMME, COMPUTER PROGRAMME PRODUCT, COMPUTER AND VEHICLE**

VERFAHREN UND VORRICHTUNG FÜR ADAPTIVE GESCHWINDIGKEITSREGELUNG, COMPUTERPROGRAMM, COMPUTERPROGRAMMPRODUKT, COMPUTER UND FAHRZEUG

DISPOSITIF ET PROCÉDÉ POUR UN RÉGULATEUR DE VITESSE ADAPTATIF, PROGRAMME INFORMATIQUE, PRODUIT DE PROGRAMME INFORMATIQUE, ORDINATEUR ET VÉHICULE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.02.2008 SE 0800281**

(43) Date of publication of application:
**17.11.2010 Bulletin 2010/46**

(73) Proprietor: **Scania CV AB (PUBL)**
**151 87 Södertälje (SE)**

(72) Inventor: **BREDBERG, Linus**
**S-SE-151 46 Södertälje (SE)**

(56) References cited:
**WO-A1-03/016943      US-A1- 2003 179 084**
**US-A1- 2004 066 285      US-A1- 2006 031 015**
**US-A1- 2007 073 473      US-A1- 2007 073 473**
**US-A1- 2007 182 623      US-B1- 6 727 844**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical field

The present invention relates to a method according to the introductory part of the attached claim 1.
The invention relates also to a device according to the introductory part of the attached claim 13.
The invention relates also to a computer programme according to the introductory part of the attached claim 25.
The invention further relates to a computer programme product according to the attached claim 37 and a computer according to the attached claim 38.
The invention relates also to a vehicle according to the attached claim 39.

State of the art

Technology substantially as above is already known.

Adaptive cruise control (ACC) is a further development of the conventional cruise control which is now present in many vehicles. The difference is that a vehicle equipped with ACC automatically adapts its speed to that of a vehicle ahead. A known system currently allows the vehicle to decelerate to 16 km/h, whereupon the system is deactivated and the driver has to take over. Adaptive cruise control with Stop-&-Go function allows the vehicle to decelerate to a halt if a vehicle ahead does so. This takes place without the function being deactivated. When thereafter the vehicle ahead sets off again, the following vehicle also does so, possibly after clearance from the driver.
A Stop-&-Go function entails new requirements for information about the field of view ahead of the vehicle and for target monitoring.
A substantial problem even where short-distance sensors for target information reporting are used is that they make no distinction between stationary and moving targets. False targets ("phantom targets") may also be reported. It is for example unacceptable to erroneously allow a stationary target such as a column of a wire fence close to the side of the vehicle to slip through to the speed regulating system and result in sudden braking. It is also important to ascertain which targets are relevant. Another problem is sifting out stationary targets from moving targets, since poor speed indication from the sensors may result in a stationary target being reported as a slowly moving target. The latter being approved as a relevant target may well cause the vehicle to come to a sudden halt.
A known technique uses two image sensors whereby target location is by image clustering. This involves inter alia a large and expensive information processing capacity.
Another known technique uses two radar sensors which have different areas of performance, one for wide view and one for long view. This does not involve any requirements for accurate control of the field of view ahead of the vehicle.
WO 03/016943 discloses a near object detection system including a plurality of sensors, each of the sensors for providing detection coverage in a predetermined coverage zone. Each of the sensors includes means for sharing target data between each of the plurality of sensors in the near object detection system. Each sensor provides seven beams forming radial sections. Detections provided by the sensors are represented graphically rectangular, in which the rows correspond to the seven beams of each sensor and the columns corresponds to range cells.
The object of the present invention is to propose a solution to the current problems which provides reliable, simple and accurate target monitoring by using limited computation capacity and existing operating information concerning the vehicle.

SUMMARY OF THE INVENTION

The object as above and further advantages are achieved by a method, a device, a computer programme, a computer programme product, a computer and a vehicle with features according to the attached claims 1, 13, 25, 37, 38 and 39 respectively.
Other and further advantages are afforded by what is indicated in the respective dependent claims.

BRIEF DESCRIPTION OF THE DRAWINGS

Good understanding of the invention should be achievable in the light of the following detailed description read in conjunction with the attached drawings, in which the same reference notations refer to the same parts in the various drawings, and in which

- Fig. 1 depicts schematically a front view of a truck with three short-distance sensors, distributed in the vehicle's transverse direction, and a long-distance sensor;

- Fig. 2 depicts schematically inter alia the communication of the short-distance sensors with the vehicle's CAN network;

- Fig. 3 depicts schematically a window of error according to the invention around two reported targets at different distances from a short-distance sensor;

- Fig. 4 depicts schematically a version of curve compensation during target following;

- Fig. 5 depicts schematically an example of registered distances from a vehicle followed (a target) during a sequence of a following process with a device according to the invention;

- Fig. 6 depicts schematically the yaw angle rate during the sequence according to Fig. 5;

- Fig. 7 depicts schematically an embodiment of a state diagram according to the invention, and

- Fig. 8 depicts schematically a configuration of an electronic data processing unit according to the invention.

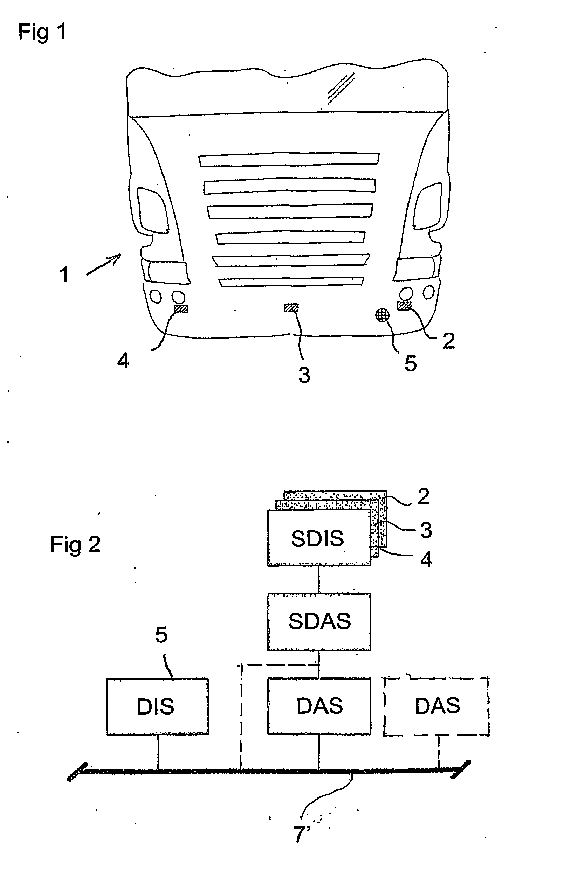

In Fig. 1, ref. 1 denotes a vehicle (a truck) which has at the front three short-distance sensors, comprising a right sensor 2, a middle sensor 3 and a left sensor 4, arranged and distributed in the transverse direction of the vehicle together with a long-distance sensor 5. The present invention relates primarily to the use of the short-distance sensors for a Stop-&-Go function as part of an adaptive vehicle cruise control function. The use of a long-distance sensor is partly prior art.

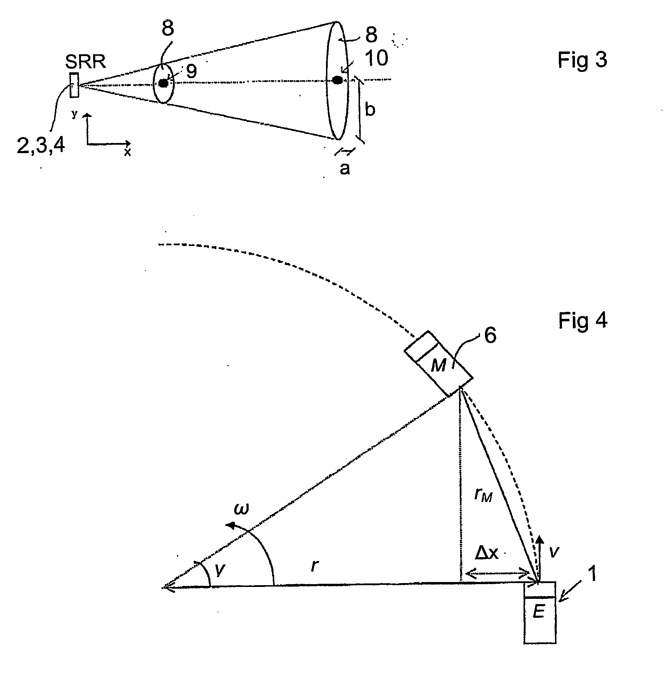

The vehicle 1 is thus intended to match the speed of forward movement of a target 6, e.g. a vehicle ahead 6, see Fig. 4, which involves the vehicle 1 stopping and, after the standstill, resuming the following of the target, with a target region ahead of the vehicle intended to be monitored for targets by sensors 2, 3, 4, 5 chosen according to the invention.

The short-distance sensors, which are of the radar type, are of a substantially known kind.

According to a here preferred version used in an experimental prototype system, the short-distance radar is manufactured by Tyco Electronic under the designation M/A-Com. It works with a carrier frequency of 24.15 GHz. The field of view of the sensor is short but wide, which renders it suitable inter alia for Stop-&-Go, parking-assistance and dead-angle applications. More detailed information about the sensor is set out in Table 1.

Table 1 Sensor data

| Frequency | 24.15 GHz |
|---|---|
| Bandwidth | 4 GHz |
| Field of view | $\pm 40°$ |
| Measuring distance | < 30 m |
| Pulse width | 1.2 ns |
| Pulse repetition frequency (PRF) about | 3 MHz |
| Cycle time | 40 ms |
| Detection angle | $\pm 65°$ (sideways), $\pm 8°$ (vertically) |
| Speed range | $\pm 25$ m/s |

The sensor can observe up to ten targets. It indicates inter alia the distance, direction and relative speed of each target.

Other makes of sensors with sensor data differing from those given here are of course conceivable.

The sensors 2, 3, 4, 5 are so arranged that according to what follows they communicate with units between the sensors and the vehicle's CAN network 7, as schematically depicted in Fig. 2 in what is to be regarded as an exemplifying version.

As ACC is a convenience system, it is placed on a special bus in the truck's CAN network. The components which belong to the system are the long-distance sensor (DIS) and a Driver Assistance System (DAS). DIS receives inter alia the vehicle's current speed and yaw angle from the CAN network's bus for units which are vital for the vehicle's functionality. The sensor thereafter uses these data in forming the target appraisal which it thereafter sends out on the bus. The actual processing of data from DIS is done in the DAS unit. This unit takes in the nearest target ahead of the respective vehicle and also the target situated behind the latter in the same driving field as the following vehicle. In addition, it also takes in information from other units. The necessary regulation of the vehicle's speed is thereafter conducted on the basis of these data.

As the short-distance sensors 2, 3, 4 (SDIS) communicate at a rate of 500 kBaud and with an identifier length of 11 bits, they do not follow the J1939 standard by which the truck communicates. Communicating with the truck's other networks therefore involves a gateway which passes on relevant information from the sensors and vice versa. At prototype production stage, this gateway took the form of a PC with a programmable Canalyzer. The processing of data from SDIS is here done by a further hardware unit of the same type as the DAS unit. This hardware allows model-based development and is therefore suitable here for prototype activity. This unit is hereinafter referred to as SDAS.

The communication between SDIS and the vehicle's CAN network divides into two different conceivable cases:

In a first case, depicted by continuous lines in Fig. 2, SDIS and SDAS are subcomponents to DAS.

In a second case, drawn as broken lines in Fig. 2, SDIS is directly connected via SDAS to the CAN network's special bus 7'. The advantage of this is that passing on information involves no need of an extra step. With this configuration, all relevant information for SDAS is therefore available via the CAN network. An advantage is that future permanent implementation of the system is simplified where the DAS unit's tasks in the future are intended to be taken care of by a coordinator. For these reasons, this architecture is used at implementation stage.

With the object of monitoring and following targets with great certainty, a target association algorithm has been produced according to the invention. In the present version, the sensors used have a field of view of $\pm 40°$. Angle measurements are part of the reporting and comprise errors of a few degrees, particularly where the angle from the sensor to the respective target is large. An error window 8 within which it is likely that the actual target is situated is therefore created around the reported target 9, 10, as schematically depicted in Fig. 3.

The size of the each error window is calculated on the basis of the uncertainty (the error) in the sensors' indications. The uncertainty increases in a linear manner with the angle relative to the target. This means, for example, that at long distances and large angles the target indication is relatively uncertain, as may be gathered from Fig. 3.

The size of these windows is calculated for each target reported by a sensor, preferably the left sensor 4. All targets reported by another sensor, preferably the right sensor 2, are thereafter compared by the target association According to the invention in pairs with these windows according to equation (1).

$$\frac{(x_{left} - x_{right})^2}{a_{left}^2} + \frac{(y_{left} - y_{right})^2}{b_{left}^2} \leq 1 \qquad (1)$$

If equation 1 is fulfilled (is valid), the detections are regarded as pertaining to the same target.

Equation 1 represents an ellipse in which x and y denote respectively the distance and the lateral displacement from the two sensors. The parameters a and b determine the size of the window and are based on the uncertainty in the sensors' indications. According to a preferred version of the target association algorithm according to the invention, the size of the windows is three standard deviations in each direction. On this basis, statistically about 98% correctness of target monitoring is achieved. For target association purposes, it is preferable, as described above, that the two outer sensors 2, 4 are concerned. The target association thus provides a very strong and substantially sufficient indication that a relevant target is observed (monitored).

During target following according to the invention, the target monitoring where the target moves along a curve is intended to incorporate a curve compensation process illustrated in Fig. 4. This compensation is intended to be based on calculated, substantially momentary, radius-of-curvature indications which are themselves based on a yaw angle rate w (in rad/s).

The yaw angle rate is obtainable from the vehicle's anti-skid function ESP based on measured lateral accelerations. It is preferable here, however, to calculate w on the basis of differences in the rotation speeds of the vehicle's front wheels. A momentary lateral displacement $\Delta y$ is intended to be calculated and added to the detected lateral position of the target monitored, whereby the latter may be classified as a relevant target. The actual calculations could probably be done by one skilled in the art.

On curves, the target is usually not observed by two sensors, since they may be at quite large relative lateral displacement. In such cases it is often only the sensor on the "inside" of the curve which monitors (observes) the target. According to a preferred version, targets monitored by only one sensor are intended to be classified as relevant approved targets which move along a curve and have been detected by the sensor which is the inside sensor relative to the curve travelled, but validation in a predetermined number of monitoring cycles is required before approval as a relevant target.

According to preferred embodiments according to the invention, classification of targets detected by only one sensor is also applied for other monitoring situations, but in such cases the respective target is intended to be validated during a predetermined number of monitoring cycles before it can be classified as a relevant target.

Information about targets monitored (target information) is classified in descending order, with the nearest target first. For practical target handling, each target monitored (observed) is allocated a track ID. This track ID thereafter accompanies the observed target irrespective of which target message the target is reported in. For the sake of consistency in target tracking, the sensor continues to thus send estimated target data even in cases where the target is not observed in a cycle. There is also a signal which indicates whether the target is observed in the current cycle or not.

If a target is not observed in two consecutive cycles, the sensor decides that the target no longer exists. It is therefore removed and its allocated track ID is not used for a new target until after a predetermined number of reporting cycles (monitoring cycles). Track IDs are denoted within the range 0-15, in which 0-14 represent targets saved and 15 no target saved. Targets saved are indicated on the basis of estimated values arrived at by internal filtering. In addition to this filtered value, information is also sent about the deviation from the observed value, i.e. the value which the sensor actually measures in the current cycle. Corresponding information is also sent for the distance indication. The track ID function results in considerable simplification of target validation.

A problem in target following with Stop-&-Go function is the handling of stationary targets which, if they are approved, give rise to strong deceleration.

Stationary targets should normally be filtered out, i.e. not reported as targets. The invention deals with this problem by incorporating the following vehicle's speed in the calculation of the target speed v according to

$$v = v_{ego} + v_{rel} \qquad\qquad (2)$$

where

$v_{ego}$ = following vehicle's speed

$v_{rel}$ = detected relative speed.

In the ideal case, a target should be classified as stationary when v = 0 km/h. As the speed indication from the sensors is relatively uncertain, the invention applies a margin of error in the classification. This results in the setting of a limit of, for example, v = 3 km/h for a target to be classifiable as stationary. Other values, higher or lower, are conceivable, depending inter alia on sensor characteristics.

According to a version, the limit for stationary targets is set as a percentage of the speed of the following vehicle, but with a specified fixed minimum limit.

A lower speed limit is intended to be set for targets which are monitored by two sensors.

Targets classified as stationary are intended to be filtered out as being not relevant, inter alia to keep down the amount of information handled.

According to the invention, a target is intended to be classified as a relevant stationary target provided that it has previously been a moving, preferably slowly moving, relevant target, and the Stop-&-Go function is maintained by such a target not being filtered out but continuing to be a relevant target, e.g. a vehicle ahead which stops and thereafter moves off again.

For Stop-&-Go function purposes, the target measurement data of a target classified as a relevant stationary target are intended to continue to be stored if the target is lost, until the target is again detected as a relevant target.

In a version, if the sensors temporarily lose a target but shortly thereafter detect it again, the latest target monitored is generally held for a number of monitoring cycles, to improve the continuity of target monitoring.

According to a version, the middle sensor's data are also intended to be correlated with the outer sensors for target association, but this does not seem necessary for achieving acceptable confidence. The increased calculation burden is rather a disadvantage.

According to a version, the long-distance sensor 5 is intended to be connected for target monitoring when the short-distance sensors do not detect (report) any targets or when the speed of the following vehicle is over 20 km/h and the distance to detected targets is more than 25 metres. Other limits are conceivable.

According to the invention, there are devices for processing the sensors monitoring results in a so-called state diagram or a state machine, in which conditions and rules for the processing of results are provided and are applied to, inter alia, target measurement data results before information concerning targets relevant for target following is in suitable cases fed to the ACC function via the special bus of the CAN network.

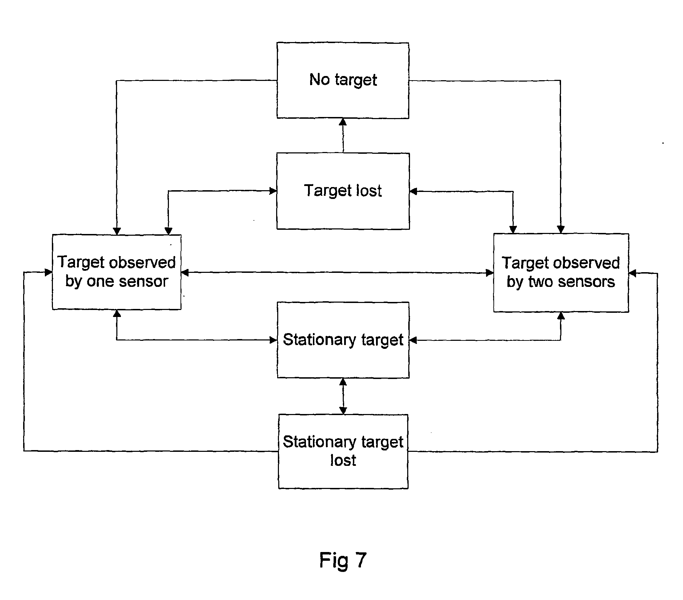

A schematically depicted state diagram appears in Fig. 7. The state diagram is thus used for target selection and target following.

The target chosen is always the detected (reported) target nearest to the following vehicle. The achievement of consistent target following without using, for example, Kalman filtering, involves allowing the difference in relative target speed to vary within a predetermined range between two monitoring cycles. If a target is lost, the latest known value is retained during a predetermined number of cycles. Stationary targets are allowed to be followed if they have previously been classified as slow targets. Should a stationary target for any reason be lost, the latest known position is saved until it is observed again. This is to prevent the ACC control unit from reassuming the previous set speed.

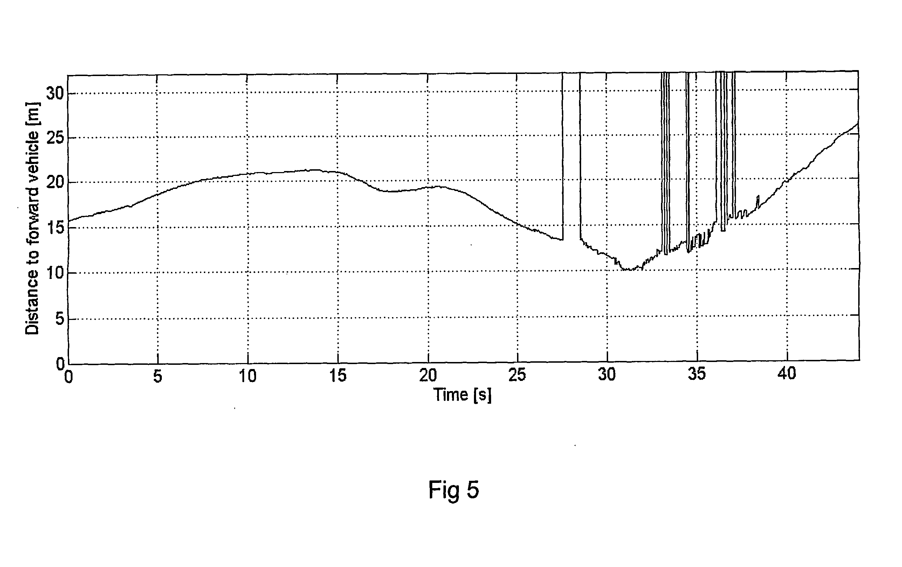

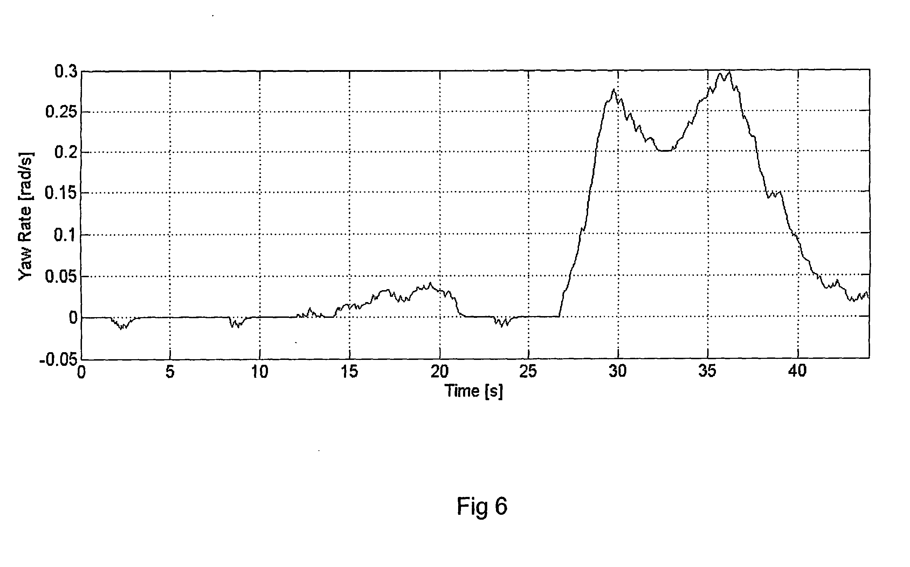

Examples of results appear in Figs. 5 and 6.

Fig. 5 illustrates target following during a sequence in which the following vehicle follows another vehicle on a straight road. After approximately 27 seconds the front vehicle enters a bend. The target is thus lost temporarily when it enters the bend (represented by a vertical peak). When the following vehicle enters the bend and the curve compensation comes into action, the target is found again and held most of the time through the bend. The yaw angle rate during this sequence is illustrated in Fig. 6.

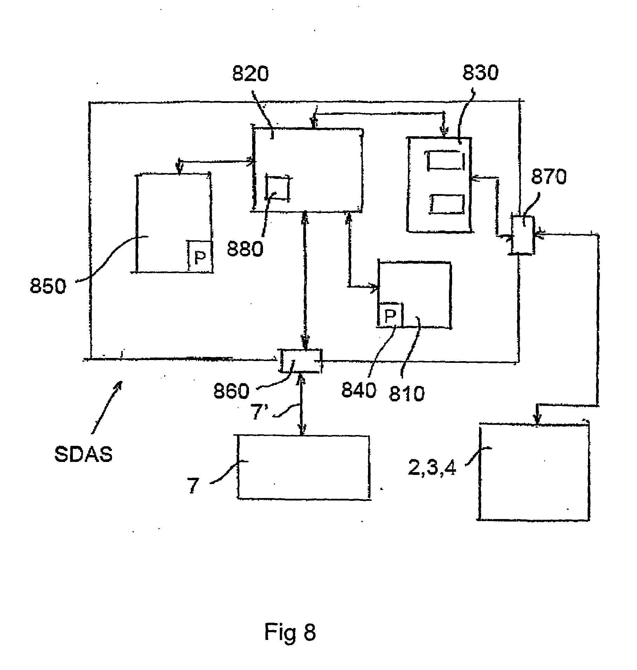

A central unit according to the invention is the electronic data processing unit SDAS (Fig. 2) or a corresponding unit in some other system configuration with corresponding function. SDAS in its context is here illustrated schematically in a configuration in Fig. 8.

SDAS comprises a non-volatile memory 810, a data processing device 820 and a read/write memory 830. The non-volatile memory 810 has a first memory section 840 in which a computer programme, e.g. an operating system, is stored for controlling the function of SDAS. In addition to this, SDAS comprises bus means, communication ports, I/O means etc. to suitable necessary extents and of known kinds.

A computer programme P comprising routines for target handling is storable in an executable manner or in a compressed state in a separate memory 850 and/or in the read/write memory 830. The memory 850 is a non-volatile memory such as a flash memory, an EPROM, an EEPROM or a ROM. The memory 850 is a computer programme product. The memory 830 is a computer programme product.

Where it is stated that the data processing device 820 performs a certain function, it is to be understood that the data processing device 820 carries out a certain portion of the programme stored in the separate memory 850 or a certain portion of the programme stored in the read/write memory 830.

The data processing device 820 can communicate with the CAN network's special bus 7' via a data communication port 860. The non-volatile memory 810 is adapted to communication with the data processing device 820. The separate memory 850 is adapted to communication with the data processing device 820. The read/write memory 830 is adapted to communication with the data processing device 820.

Target measurement data from the short-distance sensors 2, 3, 4 can be supplied to SDAS via a data communication port 870 in order to be supplied to the read/write memory 830 from which said target measurement data can be communicated to the data processing device 820. Information (measurement data) as a basis for calculations in the data processing unit can be supplied from the special bus via the data communication port.

Target measurement data received are processed in the data processing device 820 initially, thereby calculating inter alia the error window size and the curve compensation (a, b, $\Delta x$ etc.)

The data processing device 820 thereafter carries out the actual target association and determines current relevant targets with observance of predetermined rules and conditions, followed by a state machine block 880, e.g. in the data processing device 820, being caused to choose targets which are relevant at the time, which are sent out further on the special bus via the data communication port 860 to serve as a basis for the adaptive cruise control by DAS.

According to an aspect of the invention, SDAS is adapted to running a computer programme comprising computer-readable means for causing SDAS or some other computer connected to SDAS to perform the steps of

- monitoring the target region by at least two short-distance sensors 2, 3, 4 which each deliver target measurement data in the form of distance, direction and relative speed;
- by sensor fusion, carrying out target association using the uncertainty in the sensors' target measurement data indications, and thereby determining whether a target 6, 9, 10 monitored by one sensor 2, 4 lies within an error window 8 based on said uncertainty of a target 6, 9, 10 from the other sensor 2, 4, and
- if such is the case, classifying the target as a relevant monitored target.

An aspect of the invention relates to a computer programme for adaptive vehicle cruise control incorporating a Stop-&-Go function whereby the vehicle is caused to match the speed of a target, e.g. a vehicle ahead, and is on that basis caused to stop and, after the standstill, to resume following the target at the target's speed, and whereby a target region ahead of the vehicle is monitored for targets by at least two sensors comprising computer-readable programme code means for causing SDAS to perform the steps of

- monitoring the target region by at least two short-distance sensors 2, 3, 4 which each deliver target measurement data in the form of distance, direction and relative speed;
- by sensor fusion, carrying out target association using the uncertainty in the sensors' target measurement data indications, and thereby determining whether a target 6, 9, 10 monitored by one sensor 2, 4 lies within an error window 8 based on said uncertainty of a target 6, 9, 10 from the other sensor 2, 4, and
- if such is the case, classifying the target as a relevant monitored target.

The invention relates also to a computer programme product comprising a computer programme for adaptive cruise control and a computer-readable medium on which the computer programme is stored. The invention relates also to a computer, such as an in-vehicle electronic data processing unit or external vehicle computer comprising a storage means, and a computer programme for adaptive cruise control.

The method and the function of the device according to the invention are probably substantially and sufficiency indicated above.

In an ACC system with Stop-&-Go function, a target region ahead of a following vehicle is thus monitored by at least two, preferably two outer, corner-based short-distance sensors, and the sensors' monitoring uncertainty is used for creating error windows which are used for target association, resulting in excellent certainty in the classification of targets as relevant.

The classification with monitoring by only one sensor is supplemented by ancillary conditions in the form of validation during a predetermined number of monitoring cycles.

Stationary targets within the scope of the Stop-&-Go function are dealt with by filtering out and classification with conditions based on monitoring history.

The invention is described above in relation to preferred embodiments and embodiment examples.

More embodiments and minor additions and modifications are of course conceivable without thereby departing from the basic concept of the invention.

Thus it is conceivable and in certain cases even preferable to integrate the long-distance sensor DIS with the short-distance sensors and hence carry out processing of target measurement data from the long-distance sensor in the electronic data processing unit SDAS. The long-distance sensor may also be included in the state machine.

It is also conceivable to reduce the acceptance angle for incoming data from the outer short-distance sensors at least during driving on straight roads where the yaw angle is small. Problems with reporting of stationary targets, e.g. columns of wire fences, which at low speeds the sensors often detect as moving targets, can thus be avoided.

The invention should therefore not be regarded as limited to the embodiments indicated above but may be varied within the scope indicated by the attached claims.

## Claims

1. A method for adaptive vehicle cruise control incorporating a Stop-&-Go function, whereby the vehicle is caused to match the speed of a target, e.g. a vehicle ahead, and is accordingly caused to stop and, after the standstill, to resume matching the speed of the target, and whereby a target region ahead of the vehicle is monitored for targets by at least two sensors, comprising the steps of

   - monitoring the target region by at least two short-distance sensors (2, 3, 4) which each deliver target measurement data in the form of distance, direction and relative speed;
   - by sensor fusion, carrying out target association using the uncertainty in the sensors' target measurement data indications, and thereby determining whether a target (6, 9, 10) detected by one sensor (2, 4) lies within an error window (8) based on said uncertainty of a target (6, 9, 10) from the other sensor (2, 4); and, if such is the case,
   - classifying the target as a relevant monitored target,
   **characterised by** the steps of
   - calculating said error window (8) for each target reported by a sensor based on the equation for an ellipse, and
   - determining the size of said error window based on the uncertainty in the sensors' indications.

2. A method according to claim 1, **characterised by** the step of classifying as a relevant approved target a target which has been detected by only one sensor (2, 3, 4), but subject to the target being validated during a predetermined number of monitoring cycles.

3. A method according to claim 1 or 2, **characterised by** the step of applying curve compensation during target following when the target (6) moves along a curve, which curve compensation is based on calculated momentary radius-of-curvature indications which are calculated on the basis of differences in the rotation speeds of the front wheels of the vehicle (1), with a momentary lateral displacement ($\Delta y$) calculated and added to the detected lateral position of the target followed, so that the latter can be classified as a relevant target.

4. A method according to claim 3, **characterised by** classifying as a relevant approved target which moves along a curve a target which has only been monitored by the sensor which is the inside sensor relative to the curve travelled but whose validation in a predetermined number of monitoring cycles is required for approval.

5. A method according to claim 1, 2, 3 or 4, **characterised by** the step of calculating the speed v of a target as

$$v = v_{ego} + v_{rel}$$

where
$v_{ego}$ = following vehicle's speed
$v_{rel}$ = detected relative speed.

6. A method according to claim 5, **characterised by** the step of classifying a target as stationary at a predetermined speed, e.g. v < 3 m/s.

7. A method according to claim 5 or 6, **characterised by** the step of filtering out as not relevant any targets which are classified as stationary.

8. A method according to claim 5 or 6, **characterised by** the step of classifying a target as a stationary relevant target provided that it has previously been a slowly moving relevant target, for maintenance of the Stop-&-Go function.

9. A method according to claim 8, **characterised by** the step of retaining the latest target measurement data of a target which is lost but has been classified as a relevant stationary target, until it is again detected as a relevant target.

10. A method according to any one of the foregoing claims, **characterised by** the step of connecting a long-distance sensor for target monitoring when the short-distance sensors do not detect any target or when the speed of the following vehicle is over 20 km/h and the distance to detected targets is more than 25 metres.

11. A method according to any one of the foregoing claims, **characterised by** the step of allocating to each target detected a track ID which accompanies it irrespective of which target message the target is reported in.

12. A method according to any one of the foregoing claims, **characterised by** the step of processing the sensors' monitoring results in a state diagram in which conditions for processing the results are incorporated and are applied to said results.

13. A device for adaptive vehicle cruise control incorporating a Stop-&-Go function, whereby the vehicle is intended to match the speed of a target, e.g. a vehicle ahead, and accordingly to stop and, after the standstill, to resume matching the speed of the target, and whereby a target region ahead of the vehicle is intended to be monitored for targets by at least two sensors, wherein for monitoring the target region there are at least two short-distance sensors (2, 3, 4) each adapted to delivering target measurement data in the form of distance, direction and relative speed, and that there are devices for carrying out target association based on the uncertainty in the sensors' target measurement data indications, and thereby determining whether a target (6, 9, 10) monitored by one sensor (2, 4) lies within an error window (8) based on said uncertainty of a target (6, 9, 10) from the other sensor (2, 4), and, if such is the case, classifying the target as a relevant monitored target, **characterised in that** said error window (8) is represented by an eiiipse, and the size of said error window is calculated for each target reported by a sensor and based on the uncertainty in the sensors' indications.

14. A device according to claim 13, **characterised by** devices for classifying as a relevant monitored target a target which has been detected by only one sensor, but subject to the target being intended to be validated during a predetermined number of monitoring cycles.

15. A device according to claim 13 or 14, **characterised in that** the monitoring incorporates curve compensation during target following when the target (6) moves along a curve, which curve compensation is intended to be based on calculated substantially momentary radius-of-curvature indications which are intended to be calculated on the basis of differences in the rotation speeds of the front wheels of the vehicle (1), with a substantially momentary lateral displacement ($\Delta y$) intended to be calculated and added to the detected lateral position of the target followed, so that the latter can be classified as a relevant target.

16. A device according to claim 15, **characterised in that** a target detected by only one sensor is intended to be classified as a relevant approved target which moves along a curve and has been monitored by the sensor which is the inside sensor relative to the curve travelled, but whose validation in a predetermined number of monitoring cycles is required for approval.

17. A device according to claim 13, 14, 15 or 16, **characterised in that** the speed v of a target is intended to be calculated as

$$v = v_{ego} + v_{rel}$$

where
$v_{ego}$ = following vehicle's speed
$v_{rel}$ = detected relative speed.

18. A device according to claim 17, **characterised in that** targets are intended to be classified as stationary at a predetermined speed, e.g. $v < 3$ m/s.

19. A device according to any one of the foregoing claims, **characterised in that** targets which are classified as stationary are intended to be filtered out as being not relevant.

20. A device according to any one of the foregoing claims, **characterised in that** a target is intended to be classified as a stationary relevant target provided that it has previously been a slowly moving relevant target, with maintenance of the Stop-&-Go function.

21. A device according to claim 20, **characterised in that** the latest target measuring data of a target which is lost but has been classified as a relevant stationary target are intended to be retained until it is again detected as a relevant target.

22. A device according to any one of the foregoing claims, **characterised in that** a long-distance sensor (5) is intended to be connected for target monitoring when the short-distance sensors do not detect any target or when the speed of the monitoring vehicle is over 20 km/h and the distance to detected targets is more than 25 metres.

23. A device according to any one of the foregoing claims, **characterised in that** each target detected is intended to be allocated a track ID which accompanies it irrespective of which target message the target is reported in.

24. A device according to any one of the foregoing claims, **characterised by** devices for processing the sensors' monitoring results in a so-called state diagram in which conditions and rules for processing the results and for applying them to said results are incorporated.

25. A computer programme for carrying out the method according to claim 1-12 for adaptive vehicle cruise control incorporating a Stop-&-Go function, whereby the vehicle is caused to match the speed of a target, e.g. a vehicle ahead, and is accordingly caused to stop and, after the standstill, to resume matching the speed of the target, and whereby a target region ahead of the vehicle is monitored for targets by at least two sensors, comprising computer-readable programme code means for causing an electronic data processing unit to perform the steps of

   - monitoring the target region by at least two short-distance sensors (2, 3, 4) which each deliver target measurement data in the form of distance, direction and relative speed;
   - by sensor fusion, carrying out target association using the uncertainty in the sensors' target measurement data indications, and thereby determining whether a target (6, 9, 10) monitored by one sensor (2, 4) lies within an error window (8) based on said uncertainty of a target (6, 9, 10) from the other sensor (2, 4); and, if such is the case,
   - classifying the target as a relevant monitored target,
   - calculating said error window (8) for each target reported by a sensor based on the equation for an ellipse, and
   - determining the size of said error window based on the uncertainty in the sensors' indications.

26. A computer programme according to claim 25, comprising computer-readable programme code means for causing an electronic data processing unit to perform the step of classifying as a relevant approved target a target which has only been monitored by one sensor (2, 3, 4), but subject to the target being validated during a predetermined number of monitoring cycles.

27. A computer programme according to claim 26, comprising computer-readable programme code means for causing an electronic data processing unit to perform the steps of applying curve compensation during target following when the target (6) moves along a curve, which curve compensation is based on calculated momentary radius-of-curvature indications which are calculated on the basis of differences in the rotation speeds of the front wheels of the vehicle (1), with a momentary lateral displacement ($\Delta y$) calculated and added to the detected lateral position of the target followed, so that the latter can be classified as a relevant target.

28. A computer programme according to claim 27, comprising computer-readable programme code means for causing an electronic data processing unit to perform the steps of classifying as a relevant approved target which moves along a curve a target which has only been monitored by the sensor which is the inside sensor relative to the curve travelled, but whose validation in a predetermined number of monitoring cycles is required for approval.

29. A computer programme according to claim 25, 26, 27 or 28, comprising computer-readable programme code means for causing an electronic data processing unit to perform the steps of calculating the speed v of a target as

$$v = v_{ego} + v_{rel}$$

where
$v_{ego}$ = following vehicle's speed
$v_{rel}$ = detected relative speed.

30. A computer programme according to claim 29, comprising computer-readable programme code means for causing an electronic data processing unit to perform the steps of classifying a target as stationary at a predetermined speed, e.g. $v < 3$ m/s.

31. A computer programme according to claim 29 or 30, comprising computer-readable programme code means for causing an electronic data processing unit to perform the steps of filtering out as not relevant any targets which are classified as stationary.

32. A computer programme according to claim 29 or 30, comprising computer-readable programme code means for causing an electronic data processing unit to perform the steps of classifying a target as a stationary relevant target provided that the target has previously been a slowly moving relevant moving target, for maintenance of the Stop-&-Go function.

33. A computer programme according to claim 32, comprising computer-readable programme code means for causing an electronic data processing unit to perform the steps of retaining the latest target measuring data of a target which is lost but has been classified as a relevant stationary target, until it is again detected as a relevant target.

34. A computer programme according to any one of the foregoing claims, comprising computer-readable programme code means for causing an electronic data processing unit to perform the steps of connecting a long-distance sensor for target monitoring when the short-distance sensors do not detect any target or when the speed of the following vehicle is over 20 km/h and the distance to detected targets is more than 25 metres.

35. A computer programme according to any one of the foregoing claims, comprising computer-readable programme code means for causing an electronic data processing unit to perform the steps of allocating to each target detected a track ID which accompanies it irrespective of which target message the target is reported in.

36. A computer programme according to any one of the foregoing claims, comprising computer-readable programme code means for causing an electronic data processing unit to perform the steps of processing the sensors' monitoring results in a state diagram in which conditions for processing the results are incorporated and are applied to said results.

37. A computer programme product comprising a computer programme for adaptive vehicle cruise control according to any one of claims 25-36 and a computer-readable medium on which the computer programme is stored.

**38.** A computer, such as an in-vehicle electronic data processing unit (SPAS) or an external vehicle computer comprising storage means and a computer programme for adaptive vehicle cruise control according to any one of claims 25-36.

**39.** A motor vehicle (1) comprising a computer according to claim 38.

**Patentansprüche**

**1.** Verfahren für adaptive Geschwlndlgkeitsregelung eines Fahrzeugs mit einer Stop-&-Go-Funktlon, wobei das Fahrzeug dazu veranlasst wird, die Geschwindigkeit eines Ziels, beispielsweise eines davor befindlichen Fahrzeugs, einzuhalten, und dementsprechend dazu veranlasst wird anzuhalten, und nach dem Stillstand das Einhalten der Geschwindigkeit des Ziels wieder aufzunehmen, und wobei ein vor dem Fahrzeug befindliches Zielgebiet durch zumindest zwei Sensoren auf Ziele hin überwacht wird, umfassend die Schritte:

- Überwachen des Zielgebiets durch zumindest zwei Nahbereichs-Sensoren (2, 3, 4), von denen jeder Zielmessdaten in Form von Entfernung, Richtung und Relatlvgeschwlndigkeit bereitstellt;
- Ausführen eines Zielvergleichs durch Sensorverbindung, unter Verwendung der Unschärfe In den Zielmessdatenangaben der Sensoren, und dadurch Bestimmen, ob ein durch einen Sensor (2, 4) erkanntes Ziel (6, 9, 10) Innerhalb eines Fehlerfensters (8) liegt, welches auf der Unschärfe eines Ziels (6, 9, 10) des anderen Sensors (2, 4) basiert; und, falls dies der Fall ist,
- Klassifizieren des Ziels als ein relevantes überwachtes Ziel,
**gekennzeichnet durch** die Schritte
- Berechnen des Fehlerfensters (8) für jedes von einem Sensor berichtete Ziel, beruhend auf der Elllpserrglelchurrg, und
- Bestimmen der Größe des Fehlerfensters, basierend auf der Unschärfe In den Angaben der Sensoren.

**2.** Verfahren nach Anspruch 1, **gekennzeichnet durch** den Schritt, ein Ziel, welches **durch** nur einen Sensor (2, 3, 4) erkannt wurde, unter dem Vorbehalt, dass das Ziel während einer vorher festgelegten Anzahl an Übenvachungszyklen valldiert wurde, als ein relevantes bestätigtes Ziel zu klassifizleren.

**3.** Verfahren nach Anspruch 1 oder 2, **gekennzeichnet durch** den Schritt, eine Kurvenkompensatlon während einer Zielverfolgung dann anzuwenden, wenn sich das Ziel (6) entlang einer Kurve bewegt, wobei die Kurvenkompensation auf berechneten, momentanen Kurvenradlus-Angaben, welche auf Basis von Drehzahlunterschleden der Vorderräder des Fahrzeugs (1) berechnet werden, mit einem momentanen Querversatz ($\Delta y$) basiert, welcher berechnet und zu der erkannten Querposition des verfolgten Ziels hinzuaddiert wird, so dass dieses als ein relevantes Ziel klassifiziert werden kann.

**4.** Verfahren nach Anspruch 3, **gekennzeichnet dadurch**, ein solches Ziel als ein relevantes bestätigtes Ziel, welches sich entlang einer Kurve bewegt, zu klassifizieren, welches nur durch den kurveninnenllegenden Sensor überwacht wurde, dessen Validierung während einer vorher bestimmten Anzahl an Überwachungszyklen Voraussetzung für die Bestätigung ist.

**5.** Verfahren nach Anspruch 1, 2, 3 oder 4, **gekennzeichnet durch** den Schritt, die Geschwindigkeit v des Ziels zu

$$v = v_{ego} + v_{rel}$$

zu berechnen, wobei gilt
$v_{ego}$ = Geschwindigkeit des folgenden Fahrzeugs
$v_{rel}$ = erkannte relative Geschwindigkelt.

**6.** Verfahren nach Anspruch 5, **gekennzeichnet durch** den Schritt, ein Ziel ab einer vorher bestimmten Geschwindigkeit, beispielsweise v < 3 m/s, als stationär zu klassifizieren.

**7.** Verfahren nach Anspruch 5 oder 6, **gekennzeichnet durch** den Schritt, alle Ziele, welche als stationär klassifiziert sind, als nicht relevant herauszufiltern.

8. Verfahren nach Anspruch 5 oder 6, **gekennzeichnet durch** den Schritt, ein Ziel als ein stationäres relevantes Ziel für den Betrieb der Stop-&-Go-Funktion zu klassifizieren, vorausgesetzt, dass es zuvor ein sich langsam bewegendes, relevantes Ziel gewesen ist.

9. Verfahren nach Anspruch 8, **gekennzeichnet durch** den Schritt, die jüngsten Zielmessdaten eines Ziels, welches verloren ist, aber als relevantes stationäres Ziel klassifiziert war, solange zu behalten, bis es wieder als relevantes Ziel erkannt wird.

10. Verfahren nach einem der vorangegangenen Ansprüche, **gekennzeichnet durch** den Schritt, dann einen Fernbereichssensors für eine Zielüberwachung zu
verbinden, wenn die Nahbereichssensoren kein Ziel erkennen, oder wenn die Geschwindigkeit des folgenden Fahrzeugs mehr als 20 km/h beträgt und die Entfernung zu erkannten Zielen größer als 25 m ist.

11. Verfahren nach einem der vorangegangenen Ansprüche, **gekennzeichnet durch** den Schritt, jedem erkannten Ziel eine Spur-ID zuzuordnen, welche es unabhängig davon behält, in welcher Zielmittellung das Ziel berichtet wurde.

12. Verfahren nach einem der vorangegangenen Ansprüche, **gekennzeichnet durch** den Schritt, die Überwachungsergebnisse der Sensoren nach einem Zustandsdiagramm zu verarbeiten, In welchem Bedingungen zur Verarbeitung der Ergebnisse enthalten sind und auf die Ergebnisse angewendet werden.

13. Vorrichtung für adaptive Geschwindigkeitsregelung eines Fahrzeugs mit einer Stop-&-Go-Funktion, wobei das Fahrzeug dazu vorgesehen ist, die Geschwindigkeit eines Ziels, beispielsweise eines davor befindlichen Fahrzeugs, einzuhalten, und dementsprechend anzuhalten, und nach dem Stillstand das Einhalten der Geschwindigkeit des Ziels wieder aufzunehmen, und wobei ein vor dem Fahrzeug befindliches Zielgebiet dazu vorgesehen ist, durch wenigstens zwei Sensoren auf Ziele hin überwacht zu werden, wobei es wenigstens zwei Nahbereichs-Sensoren (2, 3, 4) für die Überwachung des Zielgeblets gibt, von denen jeder dazu eingerichtet ist, Zielmessdaten in Form von Entfernung, Richtung und Relativgeschwindigkelt bereitzustellen, und dass Vorrichtungen dafür vorgesehen sind, Zielvergleiche auf Basis der Unschärfe der Zielmessdatenindikatoren der Sensoren auszuführen, und dadurch zu bestimmen, ob sich ein, durch einen Sensor (2, 4) beobachtetes Ziel (6, 9, 10) innerhalb eines auf der Unschärfe eines Ziels (6, 9, 10) des anderen Sensors (2, 4) basierenden Fehlerfensters (8) befindet und, sollte dies der Fall sein, das Ziel als ein relevantes überwachtes Ziel zu klassifizieren, **dadurch gekennzeichnet, dass** das Fehlerfenster (8) durch eine Ellipse dargestellt ist, und die Größe des Fehlerfensters für jedes durch einen Sensor berichtete Ziel, und basierend auf der Unschärfe In Indikatoren der Sensoren, berechnet wird.

14. Vorrichtung nach Anspruch 13, **gekennzeichnet durch** Vorrichtungen, um ein Ziel, welches nur **durch** einen Sensor erkannt wurde, und unter dem Vorbehalt, dass das Ziel wie vorgesehen während einer vorher bestimmten Anzahl an Überwachungszyklen validiert wurde, als ein relevantes überwachtes Ziel zu klassifizieren,

15. Vorrichtung nach Anspruch 13 oder 14, **dadurch gekennzeichnet, dass** die Überwachung eine Kurvenkompensation während der Zielverfolgung dann beinhaltet, wenn sich das Ziel (6) entlang einer Kurve bewegt, wobei Im Wesentlichen vorgesehen ist, dass die Kurvenkompensatlon auf berechneten, momentanen Kurvenradlusangaben, welche als auf Basis von Drehzahlenunterschleden der Vorderräder des Fahrzeugs (1) berechnet vorgesehen sind, mit einem momentanen Querversatz ($\Delta y$) basieren, welcher so vorgesehen ist, dass er berechnet und zu der erkannten Querposition des verfolgten Ziels hinzuaddiert wird, so dass dieses als ein relevantes Ziel klassifiziert werden kann.

16. Vorrichtung nach Anspruch 15, **dadurch gekennzeichnet, dass** ein durch nur einen Sensor erkanntes Ziel dazu vorgesehen ist, als ein relevantes bestätigtes Ziel, welches sich entlang einer Kurve bewegt, klassifiziert zu werden, welches zwar nur durch den kurveninnenllegenden Sensor beobachtet wurde, dessen Validierung während einer vorher bestimmten Anzahl an Überwachungszyklen aber Voraussetzung für die Bestätigung Ist.

17. Vorrichtung nach Anspruch 13, 14, 15 oder 16, **dadurch gekennzeichnet, dass** vorgesehen Ist, die Geschwindigkeit v eines Ziels zu

$$v = v_{ego} + v_{rel}$$

zu berechnen, wobei gilt

$v_{ego}$ = Geschwindigkeit des folgenden Fahrzeugs

$v_{rel}$ = erkannte Relativgeschwindigkeit.

18. Vorrichtung nach Anspruch 17, **dadurch gekennzeichnet, dass** vorgesehen ist, Ziele ab einer vorher bestimmten Geschwindigkeit, beispielsweise v < 3 m/s, als stationär zu klassifizieren.

19. Vorrichtung nach einem der vorangegangenen Ansprüche, **dadurch gekennzeichnet, dass** vorgesehen Ist, Ziele, welche als stationär klassifiziert sind, als nicht relevant herauszufiltern.

20. Vorrichtung nach einem der vorangegangenen Ansprüche, **dadurch gekennzeichnet, dass** vorgesehen ist, ein Ziel als stationäres relevantes Ziel für den Betrieb der Stop-&-Go-Funktion zu klassifizieren, vorausgesetzt, dass es zuvor ein sich langsam bewegendes, relevantes Ziel gewesen ist.

21. Vorrichtung nach Anspruch 20, **dadurch gekennzeichnet, dass** vorgesehen ist, die jüngsten Zielmessdaten eines Ziels, welches verloren ist, aber als relevantes stationäres Ziel klassifiziert war, solange zu behalten, bis es wieder als relevantes Ziel erkannt wird,

22. Vorrichtung nach einem der vorangegangenen Ansprüche, **dadurch gekennzeichnet, dass** ein Fernbereichssensor (5) dazu vorgesehen ist, dann für eine Zielbeobachtung verbunden zu werden, wenn die Nahbereichssensoren kein Ziel erkennen, oder wenn die Geschwindigkeit des beobachtenden Fahrzeugs mehr als 20 km/h beträgt und die Entfernung zu erkannten Zielen größer als 25 m ist.

23. Vorrichtung nach einem der vorangegangenen Ansprüche, **dadurch gekennzeichnet, dass** vorgesehen ist, jedem erkannten Ziel eine Spur-ID zuzuweisen, welche es unabhängig davon behält, in welcher Zielmitteilung das Ziel berichtet wurde.

24. Vorrichtung nach einem der vorangegangenen Ansprüche, **gekennzeichnet durch** Vorrichtungen zum Verarbeiten der Beobachtungsergebnisse der Sensoren nach einem sogenannten Zustandsdiagramm, In welchem Bedingungen und Regeln enthalten sind, um die Ergebnisse zu verarbelten und um sie auf diese Ergebnisse anzuwenden.

25. Computerprogramm zum Ausführen des Verfahrens nach Anspruch 1-12 für adaptive Geschwindigkeitsregelung des Fahrzeugs beinhaltend eine Stop-&-Go-Funktion, wobei das Fahrzeug dazu veranlasst wird, die Geschwindigkeit eines Ziels, beispielsweise eines davor befindlichen Fahrzeugs, einzuhalten, und dementsprechend dazu veranlasst wird, anzuhalten, und nach dem Stillstand das Einhalten der Geschwindigkeit des Ziels wieder aufzunehmen, und wobei ein vor dem Fahrzeug befindliches Zielgebiet durch zumindest zwei Sensoren auf Ziele hin überwacht wird, umfassend computerlesbare Programmcodemittel, um eine elektronische Datenverarbeltungseinheit dazu zu veranlassen, die Schritte durchzuführen:

- Überwachen des Zielgebiets durch zumindest zwei Nahbereichssensoren (2, 3, 4), von denen jeder Zielmessdaten in der Form von Entfernung, Richtung und Relativgeschwindigkeit liefert;
- Ausführen eines Zielvergleichs durch Sensorverbindung, unter Verwendung der Unschärfe In den Zielmessdatenangaben der Sensoren, und dadurch Bestimmen, ob ein durch einen Sensor (2, 4) überwachtes Ziel (6, 9, 10) innerhalb eines Fehlerfensters (8) liegt, welches auf der Unschärfe eines Ziels (6, 9, 10) des anderen Sensors (2, 4) basiert; und, falls dies der Fall ist,
- Klassifizieren des Ziels als ein relevantes überwachtes Ziel,
- Berechnen des Fehlerfensters (8) für jedes durch einen Sensor berichtete Ziel beruhend auf der Ellipsengleichung, und
- Bestimmen der Größen des Fehlerfensters, basierend auf der Unschärfe In den Angaben der Sensoren.

26. Computerprogramm nach Anspruch 25, umfassend computerlesbare Programmcodemittel, um eine elektronische Datenverarbeltungseinheit dazu zu veranlassen, den Schritt durchzuführen, ein Ziel, welches nur durch einen Sensor (2, 3, 4) überwacht wurde, aber während einer vorher festgelegten Anzahl an Überwachungszyklen validiert wurde, als ein relevantes bestätigtes Ziel zu klassifizieren.

27. Computerprogramm nach Anspruch 26, umfassend computerlesbare Programmcodemittel, um eine elektronische Datenverarbeitungseinheft dazu zu veranlassen, die Schritte durchzuführen, eine Kurvenkompensation dann während einer Zielverfolgung anzuwenden, wenn sich das Ziel (6) entlang einer Kurve bewegt, wobei die Kurvenkompensation auf errechneten, momentanen Kurvenradlusangaben, welche auf der Basis von Drehzahlunterschieden der Vorderränder des Fahrzeugs (1) berechnet werden, mit einem momentanen Querversatz (Δγ) basiert, welcher berechnet wird und zu der erkannten Querposition des verfolgten Ziels hinzuaddiert wird, so dass dieses als ein relevantes Ziel klassifiziert werden kann.

28. Computerprogramm nach Anspruch 27, umfassend computerlesbare Programmcodemittel, um eine elektronische Datenverarbeltungseinhelt dazu zu veranlassen, die Schritte durchzuführen, ein Ziel als ein relevantes, bestätigtes Ziel, welches sich eine Kurve entlang bewegt, zu klassifizieren, welches nur durch den kurveninnenllegenden Sensor überwacht wurde, dessen Valldierung während einer vorher bestimmte Anzahl an Überwachungszyklen aber Voraussetzung für die Bestätigung ist.

29. Computerprogramm nach Anspruch 25, 26, 27 oder 28, umfassend computerlesbare Programmcodemittel, um eine elektronische Datenverarbeitungseinheit dazu zu veranlassen, die Schritte durchzuführen, die Geschwindigkeit v eines Ziels zu

$$v = v_{ego} + v_{rel}$$

zu berechnen, wobei gilt

$v_{ego}$ Geschwindlgkeit des folgenden Fahrzeugs

$v_{rel}$ = erkannte Relativgeschwindigkeit.

30. Computerprogramm nach Anspruch 29, umfassend computerlesbare Programmcodemittel, um eine elektronische Datenverarbeitungseinheit dazu zu veranlassen, die Schritte durchzuführen, ein Ziel ab einer vorher bestimmten Geschwindigkeit, beispielsweise $v < 3$ m/s, als stationär zu klassifizieren.

31. Computerprogramm nach Anspruch 29 oder 30, umfassend computerlesbare Programmcodemittel, um eine elektronische Datenverarbeitungseinheit dazu zu veranlassen, die Schritte durchzuführen, alle Ziele, welche als stationär klassifiziert sind, als nicht relevant herauszufiltern.

32. Computerprogramm nach Anspruch 29 oder 30, umfassend computerlesbare Programmcodemittel, um eine elektronische Datenverarbeltungseinhelt dazu zu veranlassen, die Schritte durchzuführen, ein Ziel als ein stationäres relevantes Ziel für den Betrieb der Stop-&-Go-Funktion zu klassifizieren, vorausgesetzt, dass das Ziel zuvor ein sich langsam bewegendes relevantes Ziel gewesen ist.

33. Computerprogramm nach Anspruch 32, umfassend computerlesbare Programmcodemittel, um eine elektronische Datenverarbeitungseinheit dazu zu veranlassen, die Schritte durchzuführen, die jüngsten Zielmessdaten eines Ziels, welches verloren Ist, aber als relevantes stationäres Ziel klassifiziert war, solange zu behalten, bis es wieder als ein relevantes Ziel erkannt wird.

34. Computerprogramm nach einem der vorangegangenen Ansprüche, umfassend computeriesbare Programmcodemittl, um eine elektronische Datenverarbeitungseinheit dazu zu veranlassen, die Schritte durchzuführen, dann einen Fernbereichssensor zur Zielüberwachung zu verbinden, wenn die Nahberelchssensoren kein Ziel erkennen, oder wenn die Geschwindigkeit des folgenden Fahrzeugs mehr als 20 km/h beträgt und die Entfernung zu erkannten Zielen größer als 25 m ist.

35. Computerprogramm nach einem der vorangegangenen Ansprüche, umfassend computerlesbare Programmcodemittel, um eine elektronische Datenverarbeitungseinhelt dazu zu veranlassen, die Schritte durchzuführen, jedem erkannten Ziel eine Spur-ID zuzuweisen, welche es unabhängig davon behält, In welcher Zielmitteilung das Ziel berichtet wurde.

36. Computerprogramm nach einem der vorangegangenen Ansprüche, umfassend computerlesbare Programmcodemittel, um eine elektronische Dateriverarbeitungseinhelt dazu zu veranlassen, die Schritte durchzuführen, die Überwachungsergebnisse der Sensoren nach einem Zustandsdiagramm zu verarbeiten, In welchem Bedingungen für das Verarbeiten der Ergebnisse enthalten sind und auf die Ergebnisse angewendet werden.

37. Computerprogrammerzeugnis, umfassend ein Computerprogramm für adaptive Geschwindigkeitsregelung eines Fahrzeugs nach einem der Ansprüche 25 bis 36 und ein computerlesbares Medium, auf welchem das Computerprogramm gespeichert Ist.

**38.** Computer, wie beispielsweise eine fahrzeuggebundene elektronische Datenverarbeitungseinheit (SPAS) oder ein externer Fahrzeugcomputer, umfassend Spelchermittel und ein Computerprogramm für adaptive Geschwindigkeitsregelung eines Fahrzeugs nach einem der Ansprüche 25 bis 36.

**39.** Kraftfahrzeug (1), umfassend einen Computer nach Anspruch 38.

## Revendications

**1.** Procédé pour régulateur de vitesse adaptatif de véhicule incorporant une fonction d'arrêt et de marche, grâce auquel le véhicule est amené à s'adapter à la vitesse d'une cible, par exemple un véhicule devant lui, et est par conséquent amené à s'arrêter, et, après le temps d'arrêt, à reprendre l'adaptation à la vitesse de la cible, et grâce auquel une région cible à l'avant du véhicule est surveillée en ce qui concerne des cibles par au moins deux capteurs, comprenant les étapes consistant à:

- surveiller la région cible à l'aide d'au moins deux capteurs à courte distance (2, 3, 4) qui délivrent chacun des données de mesure de cible sous la forme d'une distance, d'une direction et d'une vitesse relative ;
- par fusion des capteurs, effectuer une association de cible à l'aide de l'incertitude dans les indications de données de mesure de cible des capteurs, et déterminer par conséquent si une cible (6, 9, 10) détectée par un capteur (2, 4) se trouve ou non à l'intérieur d'une fenêtre d'erreur (8) en fonction de ladite Incertitude d'une cible (6, 9, 10) à partir de l'autre capteur (2, 4) ; et, si c'est le cas,
- classer la cible comme étant une cible surveillée pertinente,
**caractérisé par** les étapes consistant à :
- calculer ladite fenêtre d'erreur (8) pour chaque cible indiquée par un capteur en fonction de l'équation pour une ellipse, et
- déterminer la taille de ladite fenêtre d'erreur en fonction de l'incertitude dans les indications des capteurs.

**2.** Procédé selon la revendication 1, **caractérisé par** l'étape de classement comme cible approuvée pertinente d'une cible qui a été détectée par un seul capteur (2, 3, 4), mais soumise à une validation de la cible durant un nombre prédéterminé de cycles de surveillance.

**3.** Procédé selon la revendication 1 ou 2, **caractérisé par** l'étape d'application d'une compensation de courbe durant un suivi de cible lorsque la cible (6) se déplace le long d'une courbe, cette compensation de courbe étant basée sur des indications de rayon de courbure momentanées calculées, qui sont calculées en fonction de différences dans les vitesses de rotation des roues avant du véhicule (1), avec un déplacement latéral momentané ($\Delta y$) calculé et ajouté à la position latérale détectée de la cible suivie, de telle sorte que cette dernière puisse être classée comme cible pertinente.

**4.** Procédé selon la revendication 3, **caractérisé par** le classement comme cible approuvée pertinente qui se déplace le long d'une courbe d'une cible qui n'a été surveillée que par le capteur qui est le capteur intérieur par rapport à la courbe parcourue mais dont la validation dans un nombre prédéterminé de cycles de surveillance est requise pour l'approbation.

**5.** Procédé selon la revendication 1, 2, 3 ou 4, **caractérisé par** l'étape de calcul de la vitesse v d'une cible par :

$$v = v_{ego} + v_{rel}$$

où:

$v_{ego}$ = vitesse du véhicule suiveur
$v_{rel}$ = vitesse relative détectée.

**6.** Procédé selon la revendication 5, **caractérisé par** l'étape de classement d'une cible comme stationnaire à une vitesse prédéterminée, par exemple v < 3 m/s.

7. Procédé selon la revendication 5 ou 6, **caractérisé par** l'étape de filtrage comme non pertinentes de toutes cibles qui sont classées comme stationnaires.

8. Procédé selon la revendication 5 ou 6, **caractérisé par** l'étape de classement d'une cible comme cible pertinente stationnaire pourvu qu'elle ait précédemment été une cible pertinente se déplaçant lentement, pour le maintien de la fonction d'arrêt et de marche.

9. Procédé selon la revendication 8, **caractérisé par** l'étape de conservation des dernières données de mesure de cible d'une cible qui est perdue mais qui a été classée comme cible stationnaire pertinente, jusqu'à ce qu'elle soit à nouveau détectée comme cible pertinente.

10. Procédé selon l'une quelconque des revendications précédentes, **caractérisé par** l'étape de connexion d'un capteur à longue distance pour la surveillance de cibles lorsque les capteurs à courte distance ne détectent aucune cible ou lorsque la vitesse du véhicule suiveur est supérieure à 20 km/h et que la distance jusqu'à des cibles détectées est supérieure à 25 mètres.

11. Procédé l'une quelconque des revendications précédentes, **caractérisé par** l'étape d'attribution à chaque cible détectée d'une identification de suivi qui l'accompagne quel que soit le message de cible dans lequel la cible est indiquée.

12. Procédé selon l'une quelconque des revendications précédentes, **caractérisé par** l'étape de traitement des résultats de surveillance des capteurs sous la forme d'un diagramme d'états dans lequel des conditions pour traiter les résultats sont incorporées et sont appliquées auxdits résultats.

13. Dispositif pour régulateur de vitesse adaptatif de véhicule incorporant une fonction d'arrêt et de marche, grâce auquel le véhicule est conçu pour s'adapter à la vitesse d'une cible, par exemple un véhicule devant lui, et pour s'arrêter en conséquence, et, après le temps d'arrêt, pour reprendre l'adaptation à la vitesse de la cible, et grâce auquel une région cible à l'avant du véhicule est conçue pour être surveillée en ce qui concerne des cibles par au moins deux capteurs, dans lequel, pour surveiller la région cible, il y a au moins deux capteurs à courte distance (2, 3, 4) qui sont chacun adaptés de façon à délivrer des données de mesure de cible sous la forme d'une distance, d'une direction et d'une vitesse relative, et dans lequel il y a des dispositifs pour effectuer une association de cible en fonction de l'incertitude dans les indications de données de mesure de cible des capteurs, et déterminer par conséquent si une cible (6, 9, 10) surveillée par un capteur (2, 4) se trouve ou non à l'intérieur d'une fenêtre d'erreur (8) en fonction de ladite incertitude d'une cible (6, 9, 10) à partir de l'autre capteur (2, 4), et, si c'est le cas, classer la cible comme étant une cible surveillée pertinente, **caractérisé en ce que** ladite fenêtre d'erreur (8) est représentée par une ellipse, et **en ce que** la taille de ladite fenêtre d'erreur est calculée pour chaque cible indiquée par un capteur, et en fonction de l'incertitude des indications des capteurs.

14. Dispositif selon la revendication 13, **caractérisé par** des dispositifs pour classer comme cible surveillée pertinente une cible qui a été détectée par un seul capteur, mais soumise à une intention de validation de la cible durant un nombre prédéterminé de cycles de surveillance.

15. Dispositif selon la revendication 13 ou 14, **caractérisé en ce que** la surveillance incorpore une compensation de courbe durant un suivi de cible lorsque la cible (6) se déplace le long d'une courbe, cette compensation de courbe étant conçue pour être basée sur des indications de rayon de courbure sensiblement momentanées calculées qui sont conçues pour être calculées en fonction de différences dans les vitesses de rotation des roues avant du véhicule (1), avec un déplacement latéral sensiblement momentané ($\Delta y$) conçu pour être calculé et ajouté à la position latérale détectée de la cible suivie, de telle sorte que cette dernière puisse être classée comme cible pertinente.

16. Dispositif de sécurité selon la revendication 15, **caractérisé en ce qu'**une cible détectée par un seul capteur est conçue pour être classée comme cible approuvée pertinente qui se déplace le long d'une courbe et qui a été surveillée par le capteur qui est le capteur intérieur par rapport à la courbe parcourue, mais dont la validation dans un nombre prédéterminé de cycles de surveillance est requise pour l'approbation.

17. Dispositif selon la revendication 13, 14, 15 ou 18, **caractérisé en ce que** la vitesse v d'une cible est conçue pour

être calculée par :

$$v = v_{ego} + v_{rel}$$

où :

$v_{ego}$ = vitesse du véhicule suiveur
$V_{rel}$ = vitesse relative détectée.

**18.** Dispositif selon la revendication 17, **caractérisé en ce que** des cibles sont conçues pour être classées comme stationnaires à une vitesse prédéterminée, par exemple v < 3 m/s.

**19.** Dispositif selon l'une quelconque des revendications précédentes, **caractérisé en ce que** des cibles qui sont classées comme stationnaires sont conçues pour être filtrées comme n'étant pas pertinentes.

**20.** Dispositif selon l'une quelconque des revendications précédentes, **caractérisé en ce qu'**une cible est conçue pour être classée comme cible pertinente stationnaire pourvu qu'elle ait précédemment été une cible pertinente se déplaçant lentement, avec le maintien de la fonction d'arrêt et de marche.

**21.** Dispositif selon la revendication 20, **caractérisé en ce que** les dernières données de mesure de cible d'une cible qui est perdue mais qui a été classée comme cible stationnaire pertinente sont conçues pour être conservées jusqu'à ce qu'elle soit à nouveau détectée comme cible pertinente.

**22.** Dispositif selon l'une quelconque des revendications précédentes, **caractérisé en ce qu'**un capteur à longue distance (5) est conçu pour être connecté pour la surveillance de cibles lorsque les capteurs à courte distance ne détectent aucune cible ou lorsque la vitesse du véhicule de surveillance est supérieure à 20 km/h et que la distance jusqu'à des cibles détectées est supérieure à 25 mètres.

**23.** Dispositif selon l'une quelconque des revendications précédentes, **caractérisé en ce que** chaque cible est conçue pour se voir attribuer une identification de suivi qui l'accompagne quel que soit le message de cible dans laquelle la cible est indiquée.

**24.** Dispositif selon l'une quelconque des revendications précédentes, **caractérisé par** des dispositifs pour traiter les résultats de surveillance des capteurs sous la forme de ce que l'on appelle un diagramme d'états, dans lequel des conditions et des règles pour traiter les résultats et pour les appliquer auxdits résultats sont incorporées.

**25.** Programme informatique pour exécuter le procédé selon les revendications 1 à 12 pour un régulateur de vitesse adaptatif de véhicule incorporant une fonction d'arrêt et de marche, grâce auquel le véhicule est amené à s'adapter à la vitesse d'une cible, par exemple un véhicule devant lui, et est par conséquent amené à s'arrêter, et, après le temps d'arrêt, à reprendre l'adaptation à la vitesse de la cible, et grâce auquel une région cible à l'avant du véhicule est surveillée en ce qui concerne des cibles par au moins deux capteurs, comprenant des moyens formant code de programme lisibles par un ordinateur pour faire exécuter à une unité de traitement de données électronique les étapes consistant à :

- surveiller la région cible à l'aide d'au moins deux capteurs à courte distance (2, 3, 4) qui délivrent chacun des données de mesure de cible sous la forme d'une distance, d'une direction et d'une vitesse relative ;
- par fusion des capteurs, effectuer une association de cible à l'aide de l'incertitude dans les indications de données de mesure de cible des capteurs, et déterminer par conséquent si une cible (6, 9, 10) surveillée par un capteur (2, 4) se trouve ou non à l'intérieur d'une fenêtre d'erreur (8) en fonction de ladite incertitude d'une cible (6, 9, 10) à partir de l'autre capteur (2, 4) ; et, si c'est le cas,
- classer la cible comme étant une cible surveillée pertinente,
- calculer ladite fenêtre d'erreur (8) pour chaque cible indiquée par un capteur en fonction de l'équation pour une ellipse, et
- déterminer la taille de ladite fenêtre d'erreur en fonction de l'incertitude dans les indications des capteurs.

**26.** Programme informatique selon la revendication 25, comprenant des moyens formant code de programme lisibles par un ordinateur pour faire exécuter à une unité de traitement de données électronique l'étape de classement comme cible approuvée pertinente d'une cible qui n'a été surveillée que par un seul capteur (2, 3, 4), mais soumise à une validation de la cible durant un nombre prédéterminé de cycles de surveillance.

27. Programme informatique selon la revendication 26, comprenant des moyens formant code de programme lisibles par un ordinateur pour faire exécuter à une unité de traitement de données électronique les étapes d'application d'une compensation de courbe durant un suivi de cible lorsque la cible (6) se déplace le long d'une courbe, cette compensation de courbe étant basée sur des Indications de rayon de courbure momentanées calculées, qui sont calculées en fonction de différences dans les vitesses de rotation des roues avant du véhicule (1), avec un déplacement latéral momentané ($\Delta y$) calculé et ajouté à la position latérale détectée de la cible suivie, de telle sorte que cette dernière puisse être classée comme cible pertinente.

28. Programme informatique selon la revendication 27, comprenant des moyens formant code de programme lisibles par un ordinateur pour faire exécuter à une unité de traitement de données électronique les étapes de classement comme cible approuvée pertinente qui se déplace le long d'une courbe d'une cible qui n'a été surveillée que par le capteur qui est le capteur intérieur par rapport à la courbe parcourue, mais dont la validation dans un nombre prédéterminé de cycles de surveillance est requise pour l'approbation.

29. Programme informatique selon la revendication 25, 26, 27 ou 28, Comprenant des moyens formant code de programme lisibles par un ordinateur pour faire exécuter à une unité de traitement de données électronique les étapes de calcul de la vitesse v d'une cible par :

$$v = v_{ego} + v_{rel}$$

où :

$v_{ego}$ = vitesse du véhicule suiveur
$v_{rel}$ = vitesse relative détectée.

30. Programme informatique selon la revendication 29, comprenant des moyens formant code de programme lisibles par un ordinateur pour faire exécuter à une unité de traitement de données électronique les étapes de classement d'une cible comme stationnaire à une vitesse prédéterminée, par exemple v < 3 m/s.

31. Programme informatique selon la revendication 29 ou 30, comprenant des moyens formant code de programme lisibles par un ordinateur pour faire exécuter à une unité de traitement de données électronique les étapes de filtrage comme non pertinentes de toutes cibles qui sont classées comme stationnaires.

32. Programme informatique selon la revendication 29 30, comprenant des moyens formant code de programme lisibles par un ordinateur pour faire exécuter à une unité de traitement de données électronique les étapes de classement d'une cible comme cible pertinente stationnaire pourvu que la cible ait précédemment été une cible pertinente se déplaçant lentement, pour le maintien de la fonction d'arrêt et de marche.

33. Programme informatique selon la revendication 32, comprenant des moyens formant code de programme lisibles par un ordinateur pour faire exécuter à une unité de traitement de données électronique les étapes de conservation des dernières données de mesure de cible d'une cible qui est perdue mais qui a été classée comme cible stationnaire pertinente, jusqu'à ce qu'elle soit à nouveau détectée comme cible pertinente.

34. Programme informatique selon l'une quelconque des revendications précédentes, comprenant des moyens formant code de programme lisibles par un ordinateur pour faire exécuter à une unité de traitement de données électronique les étapes de connexion d'un capteur à longue distance pour la surveillance de cibles lorsque les capteurs à courte distance ne détectent aucune cible ou lorsque la vitesse du véhicule suiveur est supérieure à 20 km/h et que la distance jusqu'à des cibles détectées est supérieure à 25 mètres.

35. Programme informatique selon l'une quelconque des revendications précédentes, comprenant des moyens formant code de programme lisibles par un ordinateur pour faire exécuter à une unité de traitement de données électronique les étapes d'attribution à chaque cible détectée d'une Identification de suivi qui l'accompagne quel que soit le message de cible dans lequel la cible est Indiquée.

36. Programme informatique selon l'une quelconque des revendications précédentes, comprenant des moyens formant code de programme lisibles par un ordinataur pour faire exécuter à une unité de traitement de données électronique les étapes de traitement des résultats de surveillance des capteurs sous la forme d'un diagramme d'états dans lequel des conditions pour traiter les résultats sont incorporées et sont appliquées auxdits résultats.

37. Produit de programme informatique comprenant un programme informatique pour un régulateur de vitesse adaptatif de véhicule selon l'une quelconque des revendications 25 à 36 et un support lisible par un ordinateur sur lequel est stocké le programme informatique.

38. Ordinateur, tel qu'une unité de traitement de données électronique embarquée dans un véhicule (SPAS) ou un ordinateur de véhicule extérieur, comprenant des moyens de mémorisation et un programme informatique pour un régulateur de vitesse adaptatif de véhicule selon l'une quelconque des revendications 25 à 36,

39. Véhicule à moteur (1) comprenant un ordinateur selon la revendication 38.

Fig 1

Fig 2

Fig 3

Fig 4

Fig 5

Fig 6

Fig 7

Fig 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03016943 A